# EUROPÄISCHE PATENTSCHRIFT

(11) **EP 3 188 943 B1**
(45) Veröffentlichungstag und Bekanntmachung des Hinweises auf die Patenterteilung: **07.10.2020**
(21) Anmeldenummer: 15745485.1
(22) Anmeldetag: 03.08.2015
(51) Int. Cl.: B60T 13/68, F16K 31/06

(54) **VENTILANKER FÜR EIN MAGNETVENTIL UND VENTILPATRONE FÜR EIN MAGNETVENTIL**
ARMATURE AND CARTRIDGE FOR A MAGNETIC VALVE
ARMATURE ET CARTOUCHE POUR VALVE MAGNETIQUE

(30) Priorität: 01.09.2014 DE 102014217447
(43) Veröffentlichungstag der Anmeldung: 12.07.2017
(73) Patentinhaber: Robert Bosch GmbH, 70442 Stuttgart (DE)
(72) Erfinder: AMBROSI, Massimiliano, 71726 Benningen (DE); KURZ, Edgar, 74081 Heilbronn-Horkheim (DE); ALAZE, Norbert, 71706 Markgroeningen (DE); EISENLAUER, Michael, 71563 Affalterbach (DE)
(86) Internationale Anmeldenummer: PCT/EP2015/067774
(87) Internationale Veröffentlichungsnummer: WO 2016/034347

(56) Entgegenhaltungen:
- DE-U1-202007 005 224
- US-A1- 2004 251 738

## Beschreibung

Die Erfindung geht aus von einem Ventilanker für ein Magnetventil nach der Gattung des unabhängigen Patentanspruchs 1 und von einer zugehörigen Ventilpatrone für ein Magnetventil nach der Gattung des unabhängigen Patentanspruchs 14.

Aus dem Stand der Technik sind stromlos offene oder geschlossene Magnetventile bekannt, welche beispielsweise als Einlassventile oder Auslassventile in einem Hydraulikaggregat eines Fahrzeugbremssystems eingesetzt werden. Über das Hydraulikaggregat können Steuer- und/oder Regelvorgänge in einem Antiblockiersystem (ABS) oder einem Antriebsschlupfregelsystem (ASR-System) oder einem elektronischen Stabilitätsprogrammsystem (ESP-System) für den Druckaufbau bzw. Druckabbau in korrespondierenden Radbremszangen durchgeführt werden. Solche Magnetventile umfassen eine Magnetbaugruppe und eine Ventilpatrone, welche einen Polkern, eine mit dem Polkern verbundene Führungshülse, einen innerhalb der Führungshülse gegen die Kraft einer Rückstellfeder zwischen einer Geschlossenposition und einer Offenposition axial beweglich geführten Ventilanker mit einem Schließelement und einen mit der Führungshülse verbundene Ventilhülse mit einem Ventilsitz umfasst. Der Ventilsitz ist zwischen mindestens einer ersten Strömungsöffnung und mindestens einer zweiten Strömungsöffnung angeordnet. Das Schließelement wirkt in der Geschlossenstellung dichtend mit dem Ventilsitz zusammen und unterbricht eine Fluidströmung zwischen der mindestens einen ersten Strömungsöffnung und der mindestens einen zweiten Strömungsöffnung. In der Offenstellung ist das Schließelement vom Ventilsitz abgehoben und ermöglicht die Fluidströmung zwischen der mindestens einen ersten Strömungsöffnung und der mindestens einen zweiten Strömungsöffnung. Durch die Bestromung der Magnetbaugruppe wird eine Magnetkraft erzeugt, welche den Ventilanker mit dem Schließelement bei einem unbestromt offenen Magnetventil von der Offenstellung in die Geschlossenstellung bewegt bis das Schließelement auf den korrespondierenden Ventilsitz trifft und diesen abdichtet. Im unbestromten Zustand bewegt die Rückstellfeder den Ventilanker mit dem Schließelement und das Schließelement hebt vom Ventilsitz ab und gibt diesen frei. Bei einem unbestromt geschlossenen Magnetventil wird der Ventilanker mit dem Schließelement durch die Bestromung der Magnetbaugruppe von der Geschlossenstellung in die Offenstellung bewegt und das Schließelement hebt aus dem Ventilsitz ab und gibt diesen frei. Wird der Strom abgeschaltet, dann bewegt die Rückstellfeder den Magnetanker mit dem Schließelement in Richtung Ventilsitz bis das Schließelement auf den Ventilsitz trifft und diesen abdichtet. Die beschriebenen Magnetventile erzeugen ein so genanntes Schließgeräusch, wenn das Schließelement, welches einen gehärteten Schließkörper umfasst, welcher beispielsweise als Stahlkugel ausgeführt ist, auf den ebenfalls aus gehärtetem Stahl bestehenden Ventilsitz trifft.

In der Offenlegungsschrift DE 10 2007 051 557 A1 wird beispielsweise ein stromlos geschlossenes Magnetventil für eine schlupfgeregelte, hydraulische Fahrzeugbremsanlage beschrieben. Das Magnetventil umfasst einen auch als Ventilpatrone bezeichneten hydraulischen Teil, welcher teilweise in einer abgestuften Bohrung eines Ventilblocks angeordnet ist, und einen elektrischen Teil, welcher im Wesentlichen aus einer Magnetbaugruppe gebildet ist, welche auf den aus dem Ventilblock ragenden Teil der Ventilpatrone aufgesteckt ist. Die Magnetbaugruppe umfasst einen Spulenkörper mit einer elektrischen Wicklung, einen magnetflussleitenden Spulenmantel und eine magnetflussleitende Ringscheibe. Der hydraulische Teil weist eine Führungshülse auf, welche an ihrem dem elektrischen Teil zugewandten Ende mit einem eingepressten und fluiddicht verschweißten Polkern verschlossen ist. In der Führungshülse ist ein längsverschiebbarer Anker aufgenommen, welcher mit einer Rückstellfeder am Polkern abgestützt ist. Polkernabgewandt weist der Anker einen in einer Vertiefung angeordneten kugelförmigen Schließkörper auf. Am polkernabgewandten Ende ist in die Führungshülse eine topfförmige Ventilhülse mit einem zylindrischen Mantel und einem Boden eingepresst. Die Ventilhülse weist am Boden einen Durchgang sowie einen hohlkegelförmigen Ventilsitz auf, welcher mit dem Schließkörper ein Sitzventil ausbildet. Mit dem Sitzventil ist eine Fluidverbindung zwischen dem Durchgang am Boden der Ventilhülse und mindestens einem Durchgang im Mantel der Ventilhülse schaltbar ausgeführt. Zudem ist außen am Mantel der Ventilhülse ein Radialfilter angeordnet, um Schmutzpartikel aus der Fluidströmung zu filtern. Die Führungshülse kann mittels einer Befestigungsbuchse in der Stufenbohrung des Ventilblocks verstemmt werden.

Aus der DE 20 2007 005 224 U1 ist eine gattungsgemäße Ventilpatrone für ein Magnetventil mit einem Polkern, einer mit dem Polkern verbundenen Führungshülse, einem innerhalb der Führungshülse gegen die Kraft einer Rückstellfeder zwischen einer Geschlossenposition und einer Offenposition axial beweglich geführten Ventilanker, welcher ein in einer Vertiefung aufgenommenes Schließelement mit einem Schließkörper umfasst, und einer mit der Führungshülse verbundenen Ventilhülse mit einem Ventilsitz bekannt, welcher zwischen mindestens einer ersten Strömungsöffnung und mindestens einer zweiten Strömungsöffnung angeordnet ist.

### Offenbarung der Erfindung

Der erfindungsgemäße Ventilanker für ein Magnetventil mit den Merkmalen des unabhängigen Patentanspruchs 1 und die korrespondierende Ventilpatrone für ein Magnetventil mit den Merkmalen des unabhängigen Patentanspruchs 14 haben demgegenüber den Vorteil, dass durch die Modifikation des Ventilankers das beim Schließen auftretende Schließgeräusch reduziert und im optimalen Fall sogar nahezu vollständig unterbunden werden kann. Durch den Einsatz eines elastischen Dämpfungselements zwischen Schließkörper und Ventilanker kann der Impuls beim Auftreffen des Schließkörpers auf den Ventilsitz gedämpft werden, so dass der Körperschall im System in vorteilhafter Weise reduziert werden kann.

Somit tragen Ausführungsformen der vorliegenden Erfindung zur Verbesserung des NVH-Verhaltens (NVH: Noise Vibration Harshness, deutsch: Geräusch, Vibration, Rauheit) des Fahrzeugs bei, indem die beim Schließen des Magnetventils entstehenden störenden Geräusche gemindert und bestenfalls ganz vermieden werden. Dadurch ist es möglich das Fahrzeugbremssystem als Ein-Box-System auszuführen und das Hydraulikaggregat direkt mit der Spritzwand des Fahrzeugs zu verschrauben, da keine störenden Schließgeräusche in den Innenraum gelangen können.

Ausführungsformen der vorliegenden Erfindung stellen einen Ventilanker für ein Magnetventil zur Verfügung, an dessen einem Ende eine Vertiefung angeordnet ist, welche ein mit einem Ventilsitz zusammenwirkendes Schließelement mit einem Schließkörper aufnimmt. Erfindungsgemäß ist zwischen dem Schließkörper und der Vertiefung ein elastisches Dämpfungselement angeordnet, welches einen beim Auftreffen des Schließkörpers auf dem Ventilsitz entstehenden Impuls dämpft.

Zudem wird eine Ventilpatrone für ein Magnetventil mit einem Polkern, einer mit dem Polkern verbundenen Führungshülse, einem innerhalb der Führungshülse gegen die Kraft einer Rückstellfeder zwischen einer Geschlossenposition und einer Offenposition axial beweglich geführten erfindungsgemäßen Ventilanker, welcher in einer Vertiefung ein Schließelement aufnimmt, und einer mit der Führungshülse verbundenen Ventilhülse mit einem Ventilsitz vorgeschlagen, welcher zwischen mindestens einer ersten Strömungsöffnung und mindestens einer zweiten Strömungsöffnung angeordnet ist. Das Schließelement wirkt in der Geschlossenstellung dichtend mit dem Ventilsitz zusammen und unterbricht eine Fluidströmung zwischen der mindestens einen ersten Strömungsöffnung und der mindestens einen zweiten Strömungsöffnung. In der Offenstellung ist das Schließelement vom Ventilsitz abgehoben und ermöglicht die Fluidströmung zwischen der mindestens einen ersten Strömungsöffnung und der mindestens einen zweiten Strömungsöffnung.

Durch die in den abhängigen Ansprüchen aufgeführten Maßnahmen und Weiterbildungen sind vorteilhafte Verbesserungen des im unabhängigen Patentanspruch 1 angegebenen Ventilankers für ein Magnetventil möglich.

Besonders vorteilhaft ist, dass das elastische Dämpfungselement als Elastomerscheibe ausgeführt werden kann. Dies ermöglicht eine einfache und kostengünstige Herstellung des elastischen Dämpfungselements. Zur Anpassung der dämpfenden Eigenschaften des elastischen Dämpfungselements können in vorteilhafter Weise zusätzliche Aussparungen am scheibenförmigen Dämpfungselement vorgesehen werden.

In weiterer vorteilhafter Ausgestaltung des erfindungsgemäßen Ventilankers kann das Schließelement als Kunststoffspritzgussteil, wie beispielsweise als Polyetheretherketon-Bauteil (PEEK-Bauteil) ausgeführt werden. Dadurch kann in vorteilhafter Weise eine zusätzliche dämpfende Wirkung erzielt werden.

In weiterer vorteilhafter Ausgestaltung des erfindungsgemäßen Ventilankers kann das Schließelement durch Haltemittel in der Vertiefung gehalten werden. Die Haltemittel können beispielsweise als punktförmige oder umlaufende Verstemmung oder Verbördelung am Rand der Vertiefung ausgebildet werden. Dadurch sind das Schließelement und das elastische Dämpfungselement vor der Montage des Ventilankers verliersicher in diesem gehalten.

In weiterer vorteilhafter Ausgestaltung des erfindungsgemäßen Ventilankers kann die Vertiefung als Sackloch ausgeführt werden, wobei das Dämpfungselement am Sacklochboden angeordnet ist. Zudem kann das Schließelement einen Grundkörper aufweisen, dessen Abmessungen an die Abmessungen der Vertiefung angepasst sind. Der Grundkörper kann beispielsweise als Zylinder oder Quader oder Würfel ausgebildet werden. Dadurch kann das Schließelement nahezu spielfrei in der Vertiefung geführt werden. Zudem kann der Schließkörper an den Grundkörper angeformt werden. Der Schließkörper kann beispielsweise als Kugelkalotte ausgeführt werden. Der Ventilsitz kann beispielsweise als Hohlkegelstumpf ausgeführt werden.

In weiterer vorteilhafter Ausgestaltung des erfindungsgemäßen Ventilankers kann der Grundkörper als elastisches Dämpfungselement ausgebildet werden. Der als elastisches Dämpfungselement ausbildete Grundkörper kann eine Aufnahme aufweisen, welche den Schließkörper aufnimmt. Der Schließkörper kann beispielsweise über eine Warmumformung in der Aufnahme des Grundkörpers gehalten werden. Alternativ kann der Schließkörper über eine Clipsverbindung in der Aufnahme des Grundkörpers gehalten werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

Kurze Beschreibung der Zeichnungen
Fig. 1 zeigt eine schematische perspektivische Schnittdarstellung eines Ausführungsbeispiels einer erfindungsgemäßen Ventilpatrone für ein Magnetventil mit einem ersten Ausführungsbeispiel eines erfindungsgemäßen Ventilankers.
Fig. 2 zeigt eine schematische perspektivische Schnittdarstellung eines zweiten Ausführungsbeispiels eines erfindungsgemäßen Ventilankers.

### Ausführungsformen der Erfindung

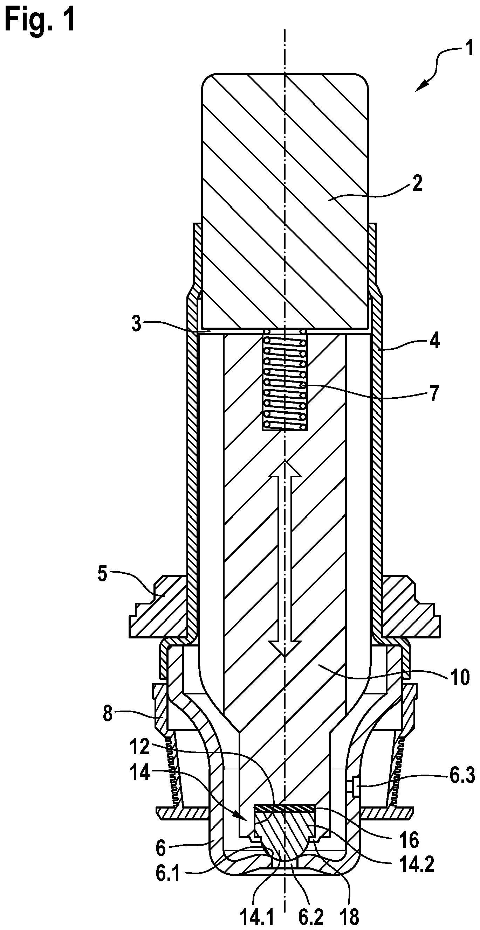

Wie aus Fig. 1 ersichtlich ist, umfasst das dargestellte Ausführungsbeispiel einer erfindungsgemäßen Ventilpatrone 1 für ein Magnetventil einen Polkern 2, eine mit dem Polkern 2 verbundene Führungshülse 4, einen innerhalb der Führungshülse 4 gegen die Kraft einer Rückstellfeder 7 zwischen einer Geschlossenposition und einer Offenposition in Pfeilrichtung axial beweglich geführten Ventilanker 10, welcher in einer Vertiefung 12, 12A ein Schließelement 14 aufnimmt, und eine mit der Führungshülse 4 verbundene Ventilhülse 6 mit einem Ventilsitz 6.1, welcher zwischen mindestens einer ersten Strömungsöffnung 6.2 und mindestens einer zweiten Strömungsöffnung 6.3 angeordnet ist. Der axial bewegliche Ventilanker 10 wird bei einer Bestromung einer nicht näher dargestellten Magnetbaugruppe, d.h. bei einem über elektrischen Anschlüsse an eine Spulenwicklung der Magnetbaugruppe angelegten elektrischen Strom, durch eine erzeugte Magnetkraft innerhalb der Führungshülse 4 gegen die Kraft der Rückstellfeder 7 bewegt. Der maximal mögliche Hub des Ventilankers 10 bzw. des Schließelements 14 wird durch einen Luftspalt 3 zwischen dem Polkern 2 und dem Ventilanker 10 vorgegeben. Wie aus Fig. 1 weiter ersichtlich ist, wirkt das Schließelement 14 in der dargestellten Geschlossenstellung dichtend mit dem Ventilsitz 6.1 zusammen und unterbricht eine Fluidströmung zwischen der mindestens einen ersten Strömungsöffnung 6.2 und der mindestens einen zweiten Strömungsöffnung 6.3. In einer nicht näher dargestellten Offenstellung ist das Schließelement 14 vom Ventilsitz 6.1 abgehoben und ermöglicht die Fluidströmung zwischen der mindestens einen ersten Strömungsöffnung 6.2 und der mindestens einen zweiten Strömungsöffnung 6.3.

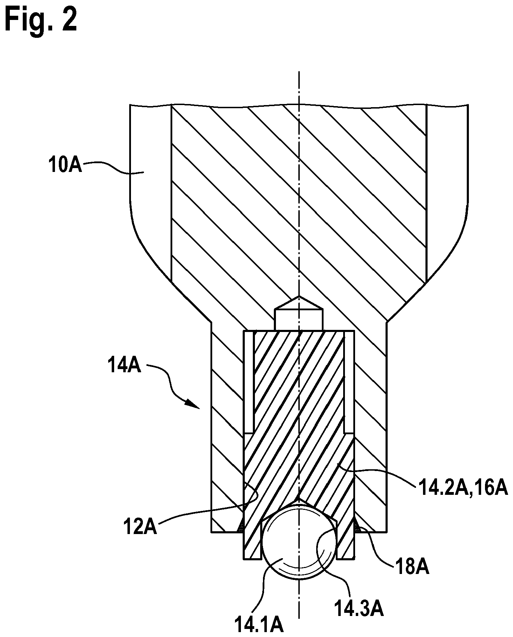

Wie aus Fig. 1 und 2, weiter ersichtlich ist, ist an einem Ende des Ventilankers 10, 10A eine Vertiefung 12, 12A angeordnet, welche das mit dem Ventilsitz 6.1 zusammenwirkende Schließelement 14, 14A mit einem Schließkörper 14.1, 14.1A zumindest teilweise aufnimmt. Erfindungsgemäß ist zwischen dem Schließkörper 14.1, 14.1A und der Vertiefung 12, 12A ein elastisches Dämpfungselement 16, 16A angeordnet, welches einen beim Auftreffen des Schließkörpers 14.1, 14.1A auf dem Ventilsitz 6.1 entstehenden Impuls dämpft.

In dem in Fig. 1 dargestellten ersten Ausführungsbeispiel des erfindungsgemäßen Ventilankers 10, ist das elastische Dämpfungselement 16 als Elastomerscheibe ausgeführt. Das als Elastomerscheibe ausgeführte Dämpfungselement 16 ist in die Vertiefung 12 im Ventilanker 10 eingelegt. Das Dämpfungselement kann zur Variierung des dämpfenden Verhaltens zusätzlich mit Aussparungen versehen werden. Um eine zusätzliche dämpfende Wirkung zu erzielen, kann das Schließelement 14 als Kunststoffspritzgussteil, wie beispielsweise als PEEK-Teil, ausgeführt werden. Wie aus Fig. 1 weiter ersichtlich ist, ist das Schließelement 14 durch als umlaufende Verstemmung oder Verbördelung am Rand der Vertiefung 12 ausgeführte Haltemittel 18 in der Vertiefung 12 gehalten. Alternativ können an mehreren Stellen punktförmige Verstemmungen oder Verbördelungen am Rand der Vertiefung 12 vorgesehen werden. So können beispielsweise an drei Stellen, die gleichmäßig verteilt am Rand der Vertiefung 12 angeordnet sind, punktförmige Verstemmungen oder Verbördelungen als Haltemittel 18 vorgesehen werden, um das Schließelement 14 in der Vertiefung 12 zu halten.

Wie aus Fig. 1 weiter ersichtlich ist, ist die Vertiefung 12 im dargestellten Ausführungsbeispiel als Sackloch ausgeführt, an dessen Boden das Dämpfungselement 16 angeordnet ist. Das Schließelement 14 weist im dargestellten ersten Ausführungsbeispiel einen zylindrischen Grundkörper 14.2 auf, dessen Abmessungen an die Abmessungen der Vertiefung 12 angepasst sind. Zudem ist ein kugelkalottenförmiger Schließkörper 14.1 an den Grundkörper 14.2 angeformt. Selbstverständlich können auch andere geeignete geometrische Formen für die Vertiefung 12 und das Schließelement 14 verwendet werden. So kann der Grundkörper 14.2 beispielsweise auch als Quader oder Würfel ausgeführt werden, und der Schließkörper 14.1 kann beispielsweise als Kegel oder Kegelstumpf ausgeführt werden.

In dem in Fig. 2 dargestellten zweiten Ausführungsbeispiel des erfindungsgemäßen Ventilankers 10A, ist der Grundkörper 14.2A des Schließelements 14A als elastisches Dämpfungselement 16A ausgebildet. Der Grundkörper 14.2A kann beispielsweise als elastisches Kunststoffspritzgußteil ausgeführt werden. Hierbei weist der Grundkörper 14.2A eine Aufnahme 14.3A auf, welche den Schließkörper 14.1A aufnimmt. Der Schließkörper 14.1A kann beispielsweise als Kugel, Kegel oder Kegelstumpf vorzugsweise aus gehärtetem Stahl hergestellt werden. Der Schließkörper 14.1A kann beispielsweise über eine Warmumformung oder über eine Clipsverbindung in der Aufnahme 14.3A des Grundkörpers 14.2A gehalten werden. Analog zum ersten Ausführungsbeispiel ist die Vertiefung 12A im dargestellten zweiten Ausführungsbeispiel ebenfalls als Sackloch ausgeführt.

Das Schließelement 14A ist analog zum ersten Ausführungsbeispiel durch als umlaufende Verstemmung oder Verbördelung am Rand der Vertiefung 12A ausgeführte Haltemittel 18A in der Vertiefung 12A gehalten. Alternativ können an mehreren Stellen punktförmige Verstemmungen oder Verbördelungen am Rand der Vertiefung 12A vorgesehen werden.

Wie aus Fig. 1 weiter ersichtlich ist, kann die Ventilpatrone 1 mit dem ersten oder zweiten Ausführungsbeispiel des Ventilankers 10, 10A über eine Führungshülse 4 in einer entsprechenden Aufnahmebohrung eines nicht näher dargestellten Fluidblocks verstemmt werden. Zudem ist im Bereich der mindestens einen zweiten Strömungsöffnung 6.3 in der Ventilhülse 6 ein Radialfilter 8 angeordnet, um Schmutzpartikel aus der Fluidströmung zu filtern.

Das dargestellte Ausführungsbeispiel betrifft eine Ventilpatrone 1 für ein stromlos geschlossenes Magnetventil. Der erfindungsgemäße Ventilanker 10, 10A kann aber auch für eine nicht näher dargestellte Ventilpatrone eines stromlos offenen Magnetventils eingesetzt werden, um das Schließgeräusch zu dämpfen.

Ausführungsformen der vorliegenden Erfindung stellen einen Ventilanker und eine Ventilpatrone für ein Magnetventil zur Verfügung, welche durch den Einsatz eines elastischen Dämpfungselements zwischen dem Schließkörper eines Schließelements und einer Vertiefung im Ventilanker den Impuls beim Auftreffen des Schließkörpers auf den Ventilsitz in vorteilhafter Weise dämpfen und so den Körperschall im Fahrzeug reduzieren.

## Patentansprüche

1. Ventilanker (10) für ein Magnetventil, an dessen einem Ende eine Vertiefung (12) angeordnet ist, welche ein mit einem Ventilsitz (6.1) zusammenwirkendes Schließelement (14, 14A) mit einem Schließkörper (14.1, 14.1A) aufnimmt, **dadurch gekennzeichnet, dass** zwischen dem Schließkörper (14.1, 14.1A) und der Vertiefung (12, 12A) ein elastisches Dämpfungselement (16, 16A) angeordnet ist, welches einen beim Auftreffen des Schließkörpers (14.1, 14.1A) auf dem Ventilsitz (6.1) entstehenden Impuls dämpft.

2. Ventilanker nach Anspruch 1, **dadurch gekennzeichnet, dass** das elastische Dämpfungselement (16) als Elastomerscheibe ausgeführt ist.

3. Ventilanker nach Anspruch 2, **dadurch gekennzeichnet, dass** das elastische Dämpfungselement (16) Aussparungen aufweist.

4. Ventilanker nach einem der Ansprüche 1 bis 3, **dadurch gekennzeichnet, dass** das Schließelement (14) als Kunststoffspritzgussteil ausgeführt ist.

5. Ventilanker nach einem der Ansprüche 1 bis 4, **dadurch gekennzeichnet, dass** das Schließelement (14, 14A) durch Haltemittel (18, 18A) in der Vertiefung (12, 12A) gehalten ist.

6. Ventilanker nach Anspruch 5, **dadurch gekennzeichnet, dass** die Haltemittel (18, 18A) als punktförmige oder umlaufende Verstemmung oder Verbördelung am Rand der Vertiefung (12, 12A) ausgebildet sind.

7. Ventilanker nach einem der Ansprüche 1 bis 6, **dadurch gekennzeichnet, dass** die Vertiefung (12, 12A) als Sackloch ausgeführt ist, wobei das Dämpfungselement (16, 16A) am Sacklochboden angeordnet ist.

8. Ventilanker nach einem der Ansprüche 1 bis 7, **dadurch gekennzeichnet, dass** das Schließelement (14, 14A) einen Grundkörper (14.2, 14.2A) aufweist, dessen Abmessungen an die Abmessungen der Vertiefung (12, 12A) angepasst sind.

9. Ventilanker nach Anspruch 8, **dadurch gekennzeichnet, dass** der Schließkörper (14.1) an den Grundkörper (14.2) angeformt ist.

10. Ventilanker nach Anspruch 8, **dadurch gekennzeichnet, dass** der Grundkörper (14.2A) als elastisches Dämpfungselement (16A) ausgebildet ist.

11. Ventilanker nach Anspruch 10, **dadurch gekennzeichnet, dass** der Grundkörper (14.2A) eine Aufnahme (14.3A) aufweist, welche den Schließkörper (14.1A) aufnimmt.

12. Ventilanker nach Anspruch 11, **dadurch gekennzeichnet, dass** der Schließkörper (14.1A) über eine Warmumformung in der Aufnahme (14.3A) des Grundkörpers (14.2A) gehalten ist.

13. Ventilanker nach Anspruch 11, **dadurch gekennzeichnet, dass** der Schließkörper (14.1A) über eine Clipsverbindung in der Aufnahme (14.3A) des Grundkörpers (14.2A) gehalten ist.

14. Ventilpatrone (1) für ein Magnetventil mit einem Polkern (2), einer mit dem Polkern (2) verbundenen Führungshülse (4), einem innerhalb der Führungshülse (4) gegen die Kraft einer Rückstellfeder (7) zwischen einer Geschlossenposition und einer Offenposition axial beweglich geführten Ventilanker (10, 10A), welcher in einer Vertiefung (12, 12A) ein Schließelement (14, 14A) aufnimmt, und einer mit der Führungshülse (4) verbundenen Ventilhülse (6) mit einem Ventilsitz (6.1), welcher zwischen mindestens einer ersten Strömungsöffnung (6.2) und mindestens einer zweiten Strömungsöffnung (6.3) angeordnet ist, wobei das Schließelement (14, 14A) in der Geschlossenstellung dichtend mit dem Ventilsitz (6.1) zusammenwirkt und eine Fluidströmung zwischen der mindestens einen ersten Strömungsöffnung (6.2) und der mindestens einen zweiten Strömungsöffnung (6.3) unterbricht, und wobei das Schließelement (14, 14A) in der Offenstellung vom Ventilsitz (6.1) abgehoben ist und die Fluidströmung zwischen der mindestens einen ersten Strömungsöffnung (6.2) und der mindestens einen zweiten Strömungsöffnung (6.3) ermöglicht, **dadurch gekennzeichnet, dass** der Ventilanker (10, 10A) nach einem der Ansprüche 1 bis 13 ausgebildet ist.

## Claims

1. Valve armature (10) for a solenoid valve, at one end of which a depression (12) is arranged, which accommodates a closing element (14, 14A) having a closing member (14.1, 14.1A) and interacting with a valve seat (6.1), **characterized in that** an elastic damping element (16, 16A), which damps a pulse occurring as the closing member (14.1, 14.1A) strikes the valve seat (6.1), is arranged between the closing member (14.1, 14.1A) and the depression (12, 12A).

2. Valve armature according to Claim 1, **characterized in that** the elastic damping element (16) is embodied as an elastomer disk.

3. Valve armature according to Claim 2, **characterized in that** the elastic damping element (16) comprises recesses.

4. Valve armature according to one of Claims 1 to 3, **characterized in that** the closing element (14) is embodied as an injection-moulded plastic part.

5. Valve armature according to one of Claims 1 to 4, **characterized in that** the closing element (14, 14A) is held in the depression (12, 12A) by retaining means (18, 18A).

6. Valve armature according to Claim 5, **characterized in that** the retaining means (18, 18A) are embodied as isolated or circumferential caulking or flanging at the edge of the depression (12, 12A).

7. Valve armature according to one of Claims 1 to 6, **characterized in that** the depression (12, 12A) is embodied as a blind hole, wherein the damping element (16, 16A) is arranged at the base of the blind hole.

8. Valve armature according to one of Claims 1 to 7, **characterized in that** the closing element (14, 14A) comprises a body (14.2, 14.2A), the dimensions of which are matched to the dimensions of the depression (12, 12A) .

9. Valve armature according to Claim 8, **characterized in that** the closing member (14.1) is formed onto the body (14.2).

10. Valve armature according to Claim 8, **characterized in that** the body (14.2A) is formed as an elastic damping element (16A).

11. Valve armature according to Claim 10, **characterized in that** the body (14.2A) comprises a socket (14.3A), which accommodates the closing member (14.1A).

12. Valve armature according to Claim 11, **characterized in that** the closing member (14.1A) is held in the socket (14.3A) of the body (14.2A) by hot deformation.

13. Valve armature according to Claim 11, **characterized in that** the closing member (14.1A) is held in the socket (14.3A) of the body (14.2A) by a clipped connection.

14. Valve cartridge (1) for a solenoid valve having a pole body (2), a guide sleeve (4) connected to the pole body (2), a valve armature (10, 10A) which is coupled to a closing element (14, 14A) in a depression (12, 12A) and is axially moveable and guided inside the guide sleeve (4) against the force of a return spring (7) between a closed position and an open position, and a valve sleeve (6) connected to the guide sleeve (4) and having a valve seat (6.1), which is arranged between at least one first flow port (6.2) and at least one second flow port (6.3), wherein the closing element (14, 14A) in the closed position has a sealing interaction with the valve seat (6.1) and interrupts a fluid flow between the at least one first flow port (6.2) and the at least one second flow port (6.3), and wherein the closing element (14, 14A) in the open position is lifted off from the valve seat (6.1) and allows the fluid flow between the at least one first flow port (6.2) and the at least one second flow port (6.3), **characterized in that** the valve armature (10, 10A) is formed according to one of Claims 1 to 13.

## Revendications

1. Induit de vanne (10) pour une électrovanne, à l'une des extrémités duquel est disposé un renfoncement (12) qui reçoit un élément de fermeture (14, 14A) comprenant un corps de fermeture (14.1, 14.1A) et coopérant avec un siège de vanne (6.1), **caractérisé en ce qu'**entre le corps de fermeture (14.1, 14.1A) et le renfoncement (12, 12A) est disposé un élément d'amortissement élastique (16, 16A) qui amortit une impulsion se produisant lorsque le corps de fermeture (14.1, 14.1A) parvient contre le siège de vanne (6.1).

2. Induit de vanne selon la revendication 1, **caractérisé en ce que** l'élément d'amortissement élastique (16) est réalisé sous forme de disque élastomère.

3. Induit de vanne selon la revendication 2, **caractérisé en ce que** l'élément d'amortissement élastique (16) présente des évidements.

4. Induit de vanne selon l'une quelconque des revendications 1 à 3, **caractérisé en ce que** l'élément de fermeture (14) est réalisé sous forme de pièce moulée par injection de plastique.

5. Induit de vanne selon l'une quelconque des revendications 1 à 4, **caractérisé en ce que** l'élément de fermeture (14, 14A) est retenu par des moyens de retenue (18, 18A) dans le renfoncement (12, 12A).

6. Induit de vanne selon la revendication 5, **caractérisé en ce que** les moyens de retenue (18, 18A) sont réalisés sous forme de matage ou de bordage ponctuel ou périphérique au niveau du bord du renfoncement (12, 12A).

7. Induit de vanne selon l'une quelconque des revendications 1 à 6, **caractérisé en ce que** le renfoncement (12, 12A) est réalisé sous forme de trou borgne, l'élément d'amortissement (16, 16A) étant disposé au niveau du fond du trou borgne.

8. Induit de vanne selon l'une quelconque des revendications 1 à 7, **caractérisé en ce que** l'élément de fermeture (14, 14A) présente un corps de base (14.2, 14.2A) dont les dimensions sont adaptées aux dimensions du renfoncement (12, 12A).

9. Induit de vanne selon la revendication 8, **caractérisé en ce que** le corps de fermeture (14.1) est façonné sur le corps de base (14.2).

10. Induit de vanne selon la revendication 8, **caractérisé en ce que** le corps de base (14.2A) est réalisé sous forme d'élément d'amortissement élastique (16A).

11. Induit de vanne selon la revendication 10, **caractérisé en ce que** le corps de base (14.2A) présente un logement (14.3A) qui reçoit le corps de fermeture (14.1A).

12. Induit de vanne selon la revendication 11, **caractérisé en ce que** le corps de fermeture (14.1A) est retenu dans le logement (14.3A) du corps de base (14.2A) par le biais d'une déformation à chaud.

13. Induit de vanne selon la revendication 11, **caractérisé en ce que** le corps de fermeture (14.1A) est retenu dans le logement (14.3A) du corps de base (14.2A) par le biais d'une connexion par enclipsage.

14. Cartouche de vanne (1) pour une électrovanne comprenant un noyau polaire (2), une douille de guidage (4) connectée au noyau polaire (2), un induit de vanne (10, 10A) guidé de manière déplaçable axialement à l'intérieur de la douille de guidage (4) à l'encontre de la force d'un ressort de rappel (7) entre une position fermée et une position ouverte, qui reçoit un élément de fermeture (14, 14A) dans un renfoncement (12, 12A), et une douille de vanne (6) connectée à la douille de guidage (4), avec un siège de vanne (6.1) qui est disposé entre au moins une première ouverture d'écoulement (6.2) et au moins une deuxième ouverture d'écoulement (6.3), l'élément de fermeture (14, 14A), dans la position fermée, coopérant hermétiquement avec le siège de vanne (6.1) et interrompant un écoulement fluidique entre l'au moins une première ouverture d'écoulement (6.2) et l'au moins une deuxième ouverture d'écoulement (6.3), et l'élément de fermeture (14, 14A), dans la position d'ouverture, étant soulevé du siège de vanne (6.1) et permettant l'écoulement fluidique entre l'au moins une première ouverture d'écoulement (6.2) et l'au moins une deuxième ouverture d'écoulement (6.3), **caractérisée en ce que** l'induit de vanne (10, 10A) est réalisé selon l'une quelconque des revendications 1 à 13.
